# EUROPÄISCHE PATENTANMELDUNG

(11) **EP 2 292 938 A1**
(43) Veröffentlichungstag der Anmeldung: **09.03.2011**
(21) Anmeldenummer: 10401147.3
(22) Anmeldetag: 24.08.2010
(51) Int. Cl.: F16B 19/08, A47L 15/50

(54) **Niet und Korbeinsatz**

(30) Priorität: 04.09.2009 DE 102009040102
(71) Anmelder: Miele & Cie. KG, 33332 Gütersloh (DE)
(72) Erfinder: Ofensberger, Andreas, 5110 Oberndorf (AT)

(57) **Zusammenfassung**

Ein Niet (1) zur Verbindung eines Drahtgestells (10) mit einer Trägerleiste (8) weist einen Setzkopf (2) und einen in eine Bohrung der Trägerleiste (8) einschiebbaren Nietschaft (3) auf, wobei der Setzkopf (2) mit einer Nut (6) zur formschlüssigen Festlegung der Trägerleiste (8) und mindestens einer Nut (5) zur formschlüssigen Festlegung mindestens eines Drahtes (9) ausgebildet ist und der senkrecht auf dem Setzkopf (2) angeformte Nietschaft (3) an seinem von dem Setzkopf (2) abgewandten Ende als Hohlzylinder (4) ausgebildet ist, wobei der Hohlzylinder (4) zur formschlüssigen Verbindung mit der Trägerleiste (8) zu einem hohlkegelförmigen Schließkopf (11) umformbar ist. Des Weiteren wird ein Korbeinsatz eines Spül- und/oder Desinfektionsautomaten beschrieben.

## Beschreibung

Die vorliegende Erfindung betrifft ein Niet zur Verbindung eines Drahtgestells mit einer Trägerleiste gemäß dem Oberbegriff des Anspruchs 1 sowie einen Korbeinsatz eines Spül-und/oder Desinfektionsautomaten gemäß dem Oberbegriff des Anspruchs 8.

Niete sind in zahlreichen Ausführungsvarianten aus dem Stand der Technik bekannt. Sie dienen zur Klemmverbindung übereinander gelegter meist flächiger Teile. Zur Verbindung eines Drahtgestells mit einer flächigen Trägerleiste, wie es beispielsweise bei Korbeinsätzen für Spül- und/oder Desinfektionsautomaten der Fall ist, sind gewöhnliche Niete nicht geeignet, da die Klemmkraft zwischen den einzelnen Bauteilen zu gering ist und die Gefahr droht, dass die Bauteile sich mit der Zeit lockern. Daher werden solche Teile zur dauerhaften Verbindung miteinander verschweißt.

Nachteilig bei dieser Art der Befestigung ist, dass eine modulare Bauweise solcher Korbeinsätze, bei der je nach Bedarf mehrere Korbeinsätze an Trägerleisten übereinander festgelegt sein können, nicht möglich ist.

Aufgabe der vorliegenden Erfindung ist es daher, ein Niet zur Verbindung eines Drahtgestells mit einer Trägerleiste bereitzustellen, mit dem ein sicheres und dauerhaftes Verbinden eines Drahtgestells mit einer Trägerleiste und somit die Möglichkeit zu einer modularen Bauweise eines Korbeinsatzes ermöglicht ist.

Diese Aufgabe wird durch ein Niet mit den Merkmalen des Anspruchs 1 sowie durch einen Korbeinsatz mit den Merkmalen des Anspruchs 8 gelöst.

Bei dem einen Setzkopf und einen in eine Bohrung der Trägerleiste einschiebbaren Schaft aufweisenden Niet ist erfindungsgemäß der Setzkopf mit einer Nut zur formschlüssigen Festlegung der Trägerleiste und mindestens einer Nut zur formschlüssigen Festlegung mindestens eines Drahtes ausgebildet und der senkrecht auf den Setzkopf angeformte Nietschaft ist an seinem von dem Setzkopf abgewandten Ende als Hohlzylinder ausgebildet, wobei der Hohlzylinder zur formschlüssigen Verbindung mit der Trägerleiste zu einem hohlkegelförmigen Schließkopf umformbar ist. Mit einem derart ausgebildeten Niet kann ein Drahtgestell mit einer Trägerleiste dauerhaft und sicher zusammen gehalten werden.

Gemäß einer Ausführungsvariante des Nietes ist die mindestens eine Nut zur formschlüssigen Festlegung des mindestens einen Drahtes in einer Grundebene des Setzkopfes ausgeformt und die Nut zur formschlüssigen Festlegung der Trägerleiste in eine der zur Grundebene parallelen Ebene auf einer Höhe des Nietschaftes. Durch dieses Übereinanderlegen von Draht und Trägerleiste wird der mindestens eine Draht zum einen von den Innenwandungen der Nut des Setzkopfes und zum anderen durch die Trägerleiste in der Nut formschlüssig festgelegt.

Gemäß einer weiteren bevorzugten Ausführungsvariante ist die Nut zur formschlüssigen Festlegung der Trägerleiste aus der Fläche des Setzkopfes, aus der der Nietschaft hervorsteht, gebildet, sowie aus mindestens zwei aus der Fläche des Setzkopfes, aus der der Nietschaft hervorsteht, hervorstehenden Stegen. Dadurch ist der Niet in Material sparender Weise optimal an die Anforderungen zum Festlegen eines Drahtes mit einer Trägerleiste ausgebildet.

Die Erfindung wird nachfolgend anhand von Ausführungsbeispielen mit Bezug auf die beigefügten Zeichnungen näher erläutert. Es zeigen:
- Figur 1a, b: unterschiedliche schematische perspektivische Darstellungen einer Ausführungsvariante eines erfindungsgemäßen Nietes,
- Figur 2: eine schematische perspektivische Darstellung des Nietes aus Figur 1a und Figur 1 b, der zwei Drähte mit einer Trägerleiste verbindet und
- Figur 3: eine schematische perspektivische Darstellung eines quer durch den Setzkopf aufgeschnittenen Nietes mit an diesen festgelegter Trägerleiste,

In der nachfolgenden Figurenbeschreibung beziehen sich Begriffe wie oben, unten, links, rechts, vorne, hinten usw. ausschließlich auf die in den jeweiligen Figuren gewählte beispielhafte Darstellung und Position des Nietes und anderer Teile. Diese Begriffe sind nicht einschränkend zu verstehen, das heißt, durch verschiedene Arbeitsstellungen oder die spiegelsymmetrische Auslegung oder dergleichen können sich diese Bezüge ändern.

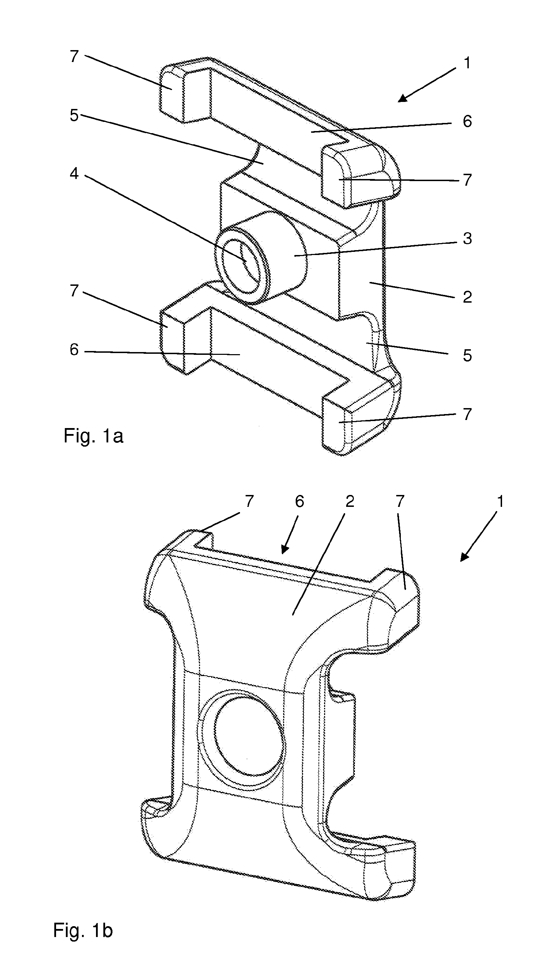

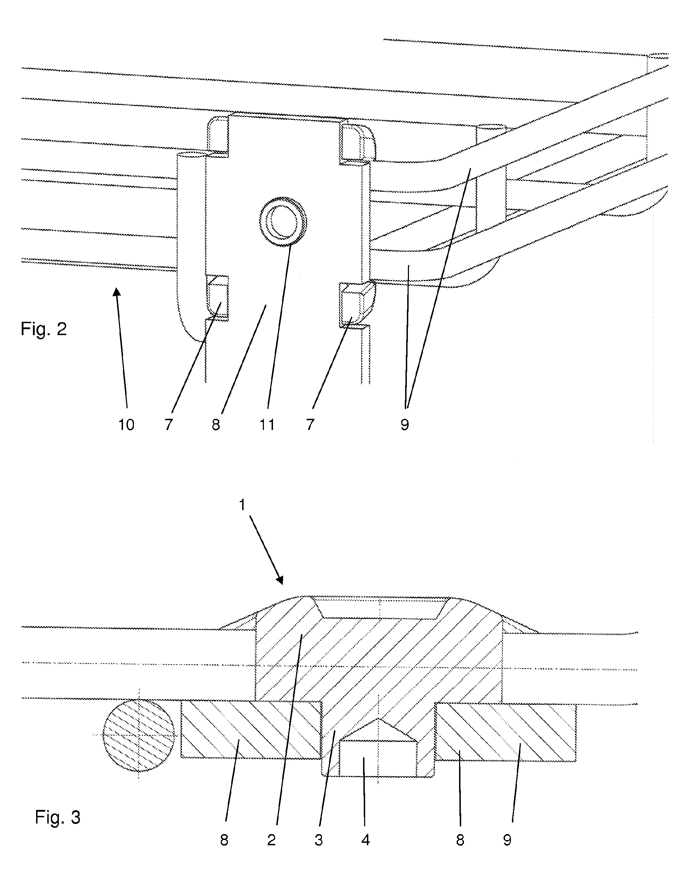

In den Figuren 1a und b ist mit dem Bezugszeichen 1 insgesamt eine bevorzugte Ausführungsvariante eines Nietes 1 zur Verbindung eines in Figur 2 teilweise gezeigten Drahtgestells 10 mit einer Trägerleiste 8 bezeichnet. Der Niet 1 weist einen Setzkopf 2 auf, der, wie hier gezeigt, eine im Wesentlichen rechteckige Grundfläche aufweist. Aus einer der Grundflächen des Setzkopfes steht zentral ein Nietschaft 3 hervor, der in seinem Urzustand, d. h. vor dem Verstemmen des Nietes, als Hohlzylinder 4 ausgebildet ist und der bei der Vernietung in eine Bohrung der Trägerleiste 8 einschiebbar ist und zur formschlüssigen Verbindung mit der Trägerleiste zu einem hohlkegelförmigen Schließkopf 11, wie es in Figur 2 gezeigt ist, umformbar ist.

Wie des Weiteren in Figur 1 a gezeigt ist, ist der Setzkopf 2 mit einer Nut 6 zur formschlüssigen Festlegung der Trägerleiste 8 (s. Fig. 2 und 3) ausgebildet. Dabei ist die Nut 6 an die Breite der daran anzulegenden Trägerleiste 8 angepasst und wird von aus der Fläche des Setzkopfes 2, aus der der Nietschaft 3 hervorsteht, hervorstehenden Stegen 7 begrenzt. Dadurch ist die Trägerleiste 8 formschlüssig durch den Außenmantel des als Hohlzylinder 4 ausgebildeten Nietschaftes 3 sowie durch die aus dem Setzkopf 2 hervorstehenden Stege 7 in dem Niet 1 festgelegt.

Zur Aufnahme und formschlüssigen Festlegung mindestens eines Drahtes 9 (s. Fig. 2) des Drahtgestells 10 ist der Setzkopf 2 mit mindestens einer Nut 5, in der hier gezeigten Ausführungsvariante mit zwei Nuten 5 für zwei Drähte 9 ausgebildet. Die Nut 5 zur Festlegung des Drahtes 9 verläuft dabei bevorzugt senkrecht zur Nut 6 zur formschlüssigen Festlegung der Trägerleiste 8, um dem Aufbau eines Drahtgestells 10, wie es in Figur 2 gezeigt ist, Rechnung zu tragen, bei dem an den jeweiligen Ecken des Gestells 10 Trägerleisten 8 senkrecht aufgestellt sind, die mit horizontal verlaufenden Drähten 9 aneinander festzulegen sind.

Die in Figur 1 a gezeigten beiden Nuten 5 zur Festlegung jeweils eines Drahtes 9 sind bevorzugt in einer Grundebene des Setzkopfes 2 ausgeformt und die Nut zur formschlüssigen Festlegung der Trägerleiste 8 verläuft in einer zu der Grundebene parallelen Ebene auf der Höhe des Nietschaftes 3. Dadurch kann bei der Montage der Setzkopf des Nietes zunächst von einer Korbinnenseite her auf die jeweiligen Drähte 9 aufgesetzt werden, wobei die Drähte 9 von drei Seiten her in der jeweiligen Nut 5 des Setzkopfes 2 umfasst werden. Anschließend wird von einer Korbaußenseite her die Trägerleiste 8 in die Nut 6 eingelegt, wobei die Bohrung in der Trägerleiste 8 den Nietschaft 3 aufnimmt. Anschließend wird der Hohlzylinder 4 zur formschlüssigen Verbindung mit der Trägerleiste 8 zu einem hohlkegelförmigen Schließkopf 11 mit einem Nietwerkzeug umgeformt, so dass die Trägerleiste 8 kraftschlüssig durch das Aufweiten der Bohrung an dem Niet gehalten ist. Außerdem ist durch das Aufsetzen der Trägerleiste 8 die offene Seite der Nut 5 zur formschlüssigen Festlegung der Drähte 9 abgedeckt, so dass auch die Drähte 9 fest in dem Niet aufgenommen sind.

Das Drahtgestell 10 und die vorbeschriebene Nietverbindung wird in bevorzugter Weise zur Bildung eines Korbeinsatzes für einen Spül und/oder Desinfektionsautomaten verwendet. Mit den in der oben beschriebenen Weise ausgebildeten Nieten 1 ist eine Verdrehung zwischen einer Trägerleiste und einem der Drähte 9 wirksam verhindert, so dass die einzelnen Ebenen des Korbeinsatzes 10 auch bei ungleichmäßiger Belastung ihre Position zuverlässig unverändert beibehalten.

## Patentansprüche

1. Niet (1) zur Verbindung eines Drahtgestells (10) mit einer Trägerleiste (8), aufweisend einen Setzkopf (2) und
einen in eine Bohrung der Trägerleiste (8) einschiebbaren Nietschaft (3),
**dadurch gekennzeichnet,**
**dass** der Setzkopf (2) mit einer Nut (6) zur formschlüssigen Festlegung der Trägerleiste (8) und mindestens einer Nut (5) zur formschlüssigen Festlegung mindestens eines Drahtes (9) ausgebildet ist und
der senkrecht auf dem Setzkopf (2) angeformte Nietschaft (3) an seinem von dem Setzkopf (2) abgewandten Ende als Hohlzylinder (4) ausgebildet ist, wobei der Hohlzylinder (4) zur formschlüssigen Verbindung mit der Trägerleiste (8) zu einem hohlkegelförmigen Schließkopf (11) umformbar ist.

2. Niet (1) nach Anspruch 1,
**dadurch gekennzeichnet,**
**dass** die Nut (6) zur formschlüssigen Festlegung der Trägerleiste (8) senkrecht zu der mindestens einen Nut (5) zur formschlüssigen Festlegung des mindestens einen Drahtes (9) verläuft.

3. Niet (1) nach Anspruch 1 oder 2,
**dadurch gekennzeichnet,**
**dass** die mindestens eine Nut (5) zur formschlüssigen Festlegung des mindestens einen Drahtes (9) in einer Grundebene des Setzkopfes (2) ausgeformt ist und die Nut (6) zur formschlüssigen Festlegung der Trägerleiste (8) in einer zu der Grundebene parallelen Ebene auf einer Höhe des Nietschaftes (3) verläuft.

4. Niet (1) nach einem der vorstehenden Ansprüche,
**dadurch gekennzeichnet,**
**dass** die Nut (6) zur formschlüssigen Festlegung der Trägerleiste (8) aus der Fläche des Setzkopfes (2), aus der der Nietschaft (3) hervorsteht, sowie aus mindestens zwei aus der Fläche des Setzkopfes (2), aus der der Nietschaft (3) hervorsteht, hervorstehenden Stegen (7) gebildet ist.

5. Niet (1) nach Anspruch 4,
**dadurch gekennzeichnet,**
**dass** der Setzkopf (2) als rechteckiges flächiges Element ausgebildet ist.

6. Niet (1) nach Anspruch 5,
**dadurch gekennzeichnet,**
**dass** an jeder der Ecken des rechteckigen Setzkopfes (2) ein Steg (7) hervorsteht.

7. Niet (1) nach einem der vorstehenden Ansprüche,
**dadurch gekennzeichnet,**
**dass** der Setzkopf (2) zwei Nuten (5) zur formschlüssigen Festlegung von zwei Drähten (9) aufweist.

8. Korbeinsatz eines Spül- und/oder Desinfektionsautomaten, aufweisend mindestens ein aus Drähten (9) bestehendes Drahtgestell (10) und mehrere an dem Drahtgestell (10) festgelegte Trägerleisten (8),
**dadurch gekennzeichnet,**
**dass** die Trägerleisten (8) an den Drähten (9) des Drahtgestells (10) mit Nieten (1) gemäß einem der Ansprüche 1 bis 7 festgelegt sind.
